# EUROPEAN PATENT APPLICATION

(11) **EP 1 562 194 A2**
(43) Date of publication of application: **10.08.2005**
(21) Application number: 04252841.4
(22) Date of filing: 17.05.2004
(51) Int. Cl.: G11B 20/18, G06F 3/06

(54) **Recording/reproducing apparatus**

(30) Priority: 06.02.2004 JP 2004030098
(71) Applicant: Hitachi Ltd., Tokyo (JP)
(72) Inventor: Sugimura, Naozumi, Hitachi, Ltd. Int. Prop. Group, Chiyoda-ku Tokyo 100-8220 (JP); Chiba, Hiroshi, Hitachi, Ltd. Int. Property Group, Chiyoda-ku Tokyo 100-8220 (JP)
(74) Representative: Calderbank, Thomas Roger

(57) **Abstract**

A recording/reproducing apparatus includes a command inputting unit for inputting a command that the recording/reproducing apparatus should execute, and a command-aborting instruction inputting unit (303) for inputting a command-aborting instruction. While a disc drive is repeating a retry operation of the command (S2,S3,S5), an abort signal is sent to the recording/reproducing apparatus from a host side as required. In response to reception of the abort signal (S5:YES), the recording/reproducing apparatus aborts the retry operation of the command (S6). As a result, the number of the retry operations to be repeated is controlled.

## Description

The present invention relates to a recording/reproducing apparatus for recording/reproducing information. More particularly, it relates to a recording/reproducing apparatus available for consumer-oriented audio-visual appliances.

Computer-oriented external recording devices, the typical examples of which are hard disc drives or optical disc drives, have been used over a wide range. These recording devices allow high-speed accesses thereto, and possess large capacities. As a result, in recent years, as disclosed in JP-A-2003-257130, these recording devices have been used over the wide range including not only computers but also such apparatuses as consumer-oriented audio-visual appliances.

The recording/reproducing apparatus as described above are designed for computers in particular, and are devised in such a manner as to enhance the reliability in data to be read and written. For example, if an error has occurred in data read from on the discs, and if the error is judged to be uncorrectable, the apparatus perform the data reading once again, then repeating the reading any number of times until the apparatus have found it possible to read correct data. This reading's repetition is referred to as "retry operation".

Also, some of the recording/reproducing apparatus are devised in such a manner as to enhance the reliability at the time of a data recording as well. This is implemented by permitting some of the recording/reproducing apparatus to perform a so-called verify operation, i.e., recorded data is read once again so as to confirm the coincidence between data read once again and the recorded data. The retry operation and the verify operation are preferable in a point that, when dealing with non-time-sequence data such as document data, these operations make it possible to ensure the reliability in the data.

Meanwhile, in the consumer-oriented audio-visual appliances starting with a video recorder, data to be dealt with are time-sequence data such as videos or audios. As a result, a higher priority is given to the recording/reproduction in actual time (which, hereinafter, will be referred to as "real time") than to the reliability in the data. Accordingly, if the computer-oriented recording/reproducing apparatus as described earlier are diverted just as they are, it takes a time to perform the retry operation or the like if a reading error has occurred. This condition results in a danger of being incapable of normally performing the data recording/reproduction in the real-time processing.

Also, at the time of the reading/writing, there are some cases where a vibration or the like shifts positions of the heads, or prevents displacements of the heads. In the case where an abnormality like this has occurred, it also takes a time to access a target sector. This condition results in a danger of aborting the data recording/reproduction and thus being incapable of normally performing the data recording/reproduction.

In the above-referenced JP-A publication, in order to allow the real-time processing, the recording apparatus are configured such that, within the disc drives, the apparatus include a function of calculating a maximum retry time, and such that the apparatus automatically perform the retry operation independently of an instruction from the host side.

The maximum time in which the retry processing is executable, however, differs depending on factors such as the data rate of data to be recorded or the contents of a processing to be performed next. Consequently, it is a difficult task to simply calculate the maximum time within the disc drives. Also, during the time in which the disc drives are executing the retry processing, the devices find it impossible to receive and execute another command. This condition results in a possibility of being incapable of performing the real-time processing.

It is an object of the present invention to solve the above-described problems and to provide a recording/reproducing apparatus that allows the execution of a real-time processing even if the recording/reproducing apparatus has been executing a retry operation.

In the present invention, a recording/reproducing apparatus comprises a command inputting unit for inputting a command that the recording/reproducing apparatus should execute, and a command-aborting instruction inputting unit for inputting a command-aborting instruction. If the command-aborting instruction is inputted while an inputted command is in execution, the recording/reproducing apparatus is so controlled as to abort the processing of the inputted command in execution, and as to transition the device to a status in which the next command can be inputted therein.

According to the present invention, it becomes possible to execute a real-time processing even if a retry operation is being executed.

Other objects, features and advantages of the invention will become apparent from the following description of the embodiments of the invention taken in conjunction with the accompanying drawings.

In the drawings
FIG. 1 is a block diagram of a disc drive;
FIG. 2 is a configuration diagram of an interface register;
FIG. 3 is a detailed diagram of a "Device Control" register;
FIG. 4 is a diagram for indicating a flowchart of a read processing; and
FIG. 5 is a block diagram of a reproducing apparatus.

Hereinafter, explanation will be given below concerning embodiments to which the present invention has been applied.

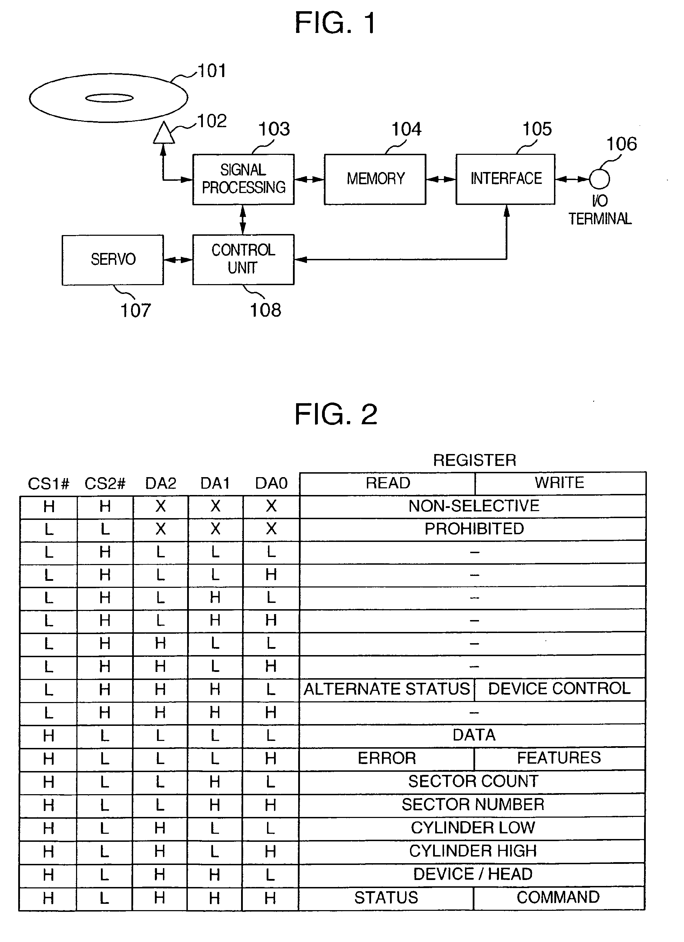

FIG. 1 illustrates a block diagram of a disc drive of the present embodiment.

The reference numerals in FIG. 1 denote the following configuration components: 101 a magnetic disc, 102 a magnetic head, 103 a signal processing circuit, 104 a memory, 105 an interface circuit, 106 an input/output terminal, 107 a servo unit, and 108 a control unit.

FIG. 2 illustrates the details of an interface register within the interface circuit 105 used in the disc drive illustrated in FIG. 1.

Commands or data that an external host issues are actually issued in such a manner that addresses corresponding to the commands or data are added thereto. This addition is performed so that the commands or data will be inputted into the addresses within the interface register determined by combinations of High (: "H" in FIG. 2) and Low (: "L" in FIG. 2) of respective signals inputted into CS1#, CS2#, DA2, DA1, and DA0. Incidentally, "X" in FIG. 2 means that it is all right whether "X" is "H" or "L". Also, "Read" and "Write" in FIG. 2 mean "Read" and "Write" seen from the external host, respectively. Performing "Read" allows the external host to confirm the operation status of the disc drive. Also, performing "Write" allows the external host to input, into the disc drive, a command that the host asks to be executed.

Here, the interface register illustrated in FIG. 2 is implemented within the interface circuit 105. The commands or data issued from the external host, which have been written into the interface register within the interface circuit 105, are read by the control unit 108. Then, operations corresponding to the commands are executed.

First, explanation will be given below concerning the operation at the time of performing a data recording in the disc drive illustrated in FIG. 1.

At the time of performing a data recording, a Record command is inputted from the external host. Concretely, the parameters corresponding to the record-started sector number are written into "Sector Number", "Cylinder Low", "Cylinder High", and "Device/Head" registers illustrated in FIG. 2, respectively. Also, the number of the writing sectors is written into a "Sector Count" register. Subsequently, the Record command is written into a "Command" register illustrated in FIG. 2, and then the Record command is executed.

The Record command written into the "Command" register is read by the control unit 108, and then the control unit makes preparations for the data recording operation. Concretely, if the Record command has been inputted, the control unit 108 sets to 1, a BSY (: Busy) signal within a "Status" register illustrated in FIG. 2, thereby informing the external host that the disc drive is busy.

Next, the control unit 108 controls the servo unit 107, thereby performing controls over the rotation speed of the magnetic disc 101 and the position of the magnetic head 102. The position of the magnetic head 102 is controlled so that, in accordance with the parameters set into the interface register, the data writing into a predetermined sector position will be able to be started. At this time, in order to inform that the reception of data to be recorded has become possible, the control unit 108 sets to 1, a DRQ (: Data Request) signal within the "Status" register illustrated in FIG. 2, and simultaneously, sets the BSY signal to 0.

Moreover, the external host confirms the status of the DRQ signal and that of the BSY signal. Then, after it has become possible for the disc drive to receive the to-be-recorded data, the external host transfers, to a "Data" register illustrated in FIG. 2, the to-be-recorded data in the number of bytes specified into the "Sector Count" register. Here, the data transfer operation from the external host to the disc drive may be performed by the CPU (: Central Processing Unit) within the external host, or may be performed by a DMA (: Direct Memory Access) transfer unit.

The to-be-recorded data inputted into the disc drive in this way is then inputted into the memory 104. The to-be-recorded data written into the memory 104 is subjected to the addition processing of an error-correction code and a predetermined modulation processing by the signal processing circuit 103, then being recorded onto the magnetic disc 101 via the magnetic head 102. The writing is performed on each sector basis. When the writing of the to-be-recorded data by the amount of 1 sector (e.g., 512 bytes) has been finished, the sector address is incremented so as to perform the writing into the next sector automatically.

If the reception of the to-be-recorded data by the amount of the sectors specified by the external host has been finished, the control unit 108 sets to 0, the DRQ signal within the "Status" register. This informs the external host that the data reception has been finished. Also, until the recording of all the received to-be-recorded data into the magnetic disc 101 has been finished, the control unit 108 maintains, at 1, the BSY signal within the "Status" register. This informs the external host that the disc drive is busy with the recording. If the recording of all the to-be-recorded data in the specified byte number has been completed, the control unit 108 sets to 0, the BSY signal within the "Status" register. This informs the external host that the recording operation has been completed.

The above-described operation transfers the predetermined to-be-recorded data from the external host to the disc drive, then performing the writing of the to-be-recorded data into the predetermined sectors on the magnetic disc.

Next, explanation will be given below concerning the operation at the time of a data reproduction in the disc drive of the present embodiment.

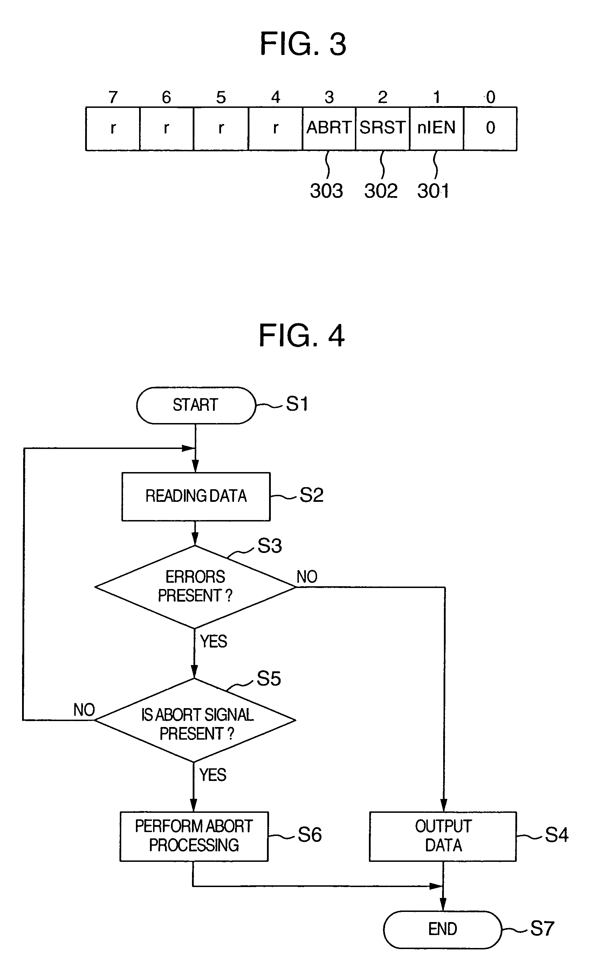

FIG. 4 illustrates a flowchart of the reproduction operation in the recording/reproducing apparatus of the present embodiment.

The reference numerals in FIG. 4 denote the following steps: S1 a start step, S2 a data reading step, S3 an error presence-or-absence judging step, S4 a data outputting step, S5 an abort signal presence-or-absence judging step, S6 an abort processing step, and S7 an END step.

At the time of data reproduction, a Reproduction command is inputted from the external host. Concretely, the parameters corresponding to the reproduction-started sector number are written into the "Sector Number", "Cylinder Low", "Cylinder High", and "Device/Head" registers illustrated in FIG. 2, respectively. Also, the number of the reading sectors is written into the "Sector Count" register. The Reproduction command is written into the "Command" register, and then the Reproduction command is executed.

The Reproduction command written into the "Command" register is read by the control unit 108, and then the control unit makes preparations for the data reproducing operation. Concretely, if the Reproduction command has been inputted, the control unit 108 sets to 1, the BSY (: Busy) signal within the "Status" register. This informs the external host that the disc drive is busy. Next, the control unit 108 controls the servo unit 107, thereby performing controls over the rotation speed of the magnetic disc 101 and the position of the magnetic head 102. The magnetic head 102 is displaced to the predetermined sector positions in accordance with the parameters set into the interface register, and then the data reproducing operation is started.

The reproduced data read by the magnetic head 102 is subjected to a predetermined demodulation processing and a predetermined error-correction processing by the signal processing circuit 103 (S2). Here, the control unit 108 judges whether or not an uncorrectable error is present in the reproduced data (S3).

If no error is present in the reproduced data, or, if errors are present therein but are corrected by the error-correction processing, the control unit 108 writes the read reproduced data in the predetermined sectors onto the memory 104, then performing a control of outputting the reproduced data to the external host (S4). Since transferring the reproduced data has become possible, concretely, the control unit 108 sets to 0, the BSY signal within the "Status" register and simultaneously, sets to 1, the DRQ signal within the "Status" register. This informs the external host that outputting the reproduced data thereto has become possible. The external host receives the reproduced data outputted via the "Data" register within the interface register.

Meanwhile, if, at the step S3, the uncorrectable errors have been judged to be present, outputting the reproduced data is not executed, and the processing proceeds to the step S5. At the step S5, the control unit 108 judges the presence or absence of the input of an abort signal. The abort signal is a signal for aborting the data reading processing. The abort signal corresponds to an ABRT register within a "Device Control" register illustrated in FIG. 2. Writing 1 into the ABRT register inputs 1 into the control unit as an abort signal. When no abort processing is performed, 0 has been inputted therein as the abort signal from the external host.

Incidentally, FIG. 3 illustrates a detailed diagram of the "Device Control" register illustrated in FIG. 2. A reference numeral 303 denotes the above-described ABRT register. In the conventionally-known interface standards, the register 303 has been not used. In the present embodiment, however, the register 303 is used as the ABRT register. On account of this, if a command-aborting instruction is inputted while an inputted command is in execution, the disc drive can be so controlled as to abort the processing of the inputted command in execution, and as to transition to a status of being capable of inputting the next command therein.

At the step S5, the control unit 108 judges the necessity as to whether or not to execute the abort processing. If the abort signal within the "Device Control" register is equal to 0, based on the retry operation, the disc drive performs the data reading once again. Concretely, the unit returns back to the step S2, then performing the data reading once again. As a result of this, if uncorrectable errors have been contained in the read data, the unit performs the data reading once again, then performing the data reading processing repeatedly until the uncorrectable errors have disappeared.

In some cases, factors such as dust or a scratch on the magnetic disc 101 prevent the data from being read satisfactorily. Also, in some cases, factors such as a noise from the outside make the read data abnormal, thus causing uncorrectable errors to occur. In the cases like this, the data is read once again in accordance with the retry operation based on the Reproduction command. This results in a possibility of being capable of reading correct data.

However, there are some cases where repeating the retry operation by the Reproduction command several times finds it impossible to read the data after all. This corresponds to, e.g., a case where a large scratch exists. In this case, repeating the retry operation necessitates and consumes a time for the data reading processing. This causes an inconvenience to occur in the case of reproducing such data as video data which requires the execution of the real-time processing.

In view of this, in the disc drive of the present embodiment, if such a time-consuming processing as the retry operation has been performed, and if the response from the disc drive has disappeared, the abort signal is inputted. This makes it possible to abort the processing by the disc drive.

Incidentally, although, in the above-described embodiment, the configuration has been given such that the retry operation is repeated, the embodiment is not limited thereto. For example, the following configuration is also available: The number of the retry operations is determined in advance, and, if uncorrectable errors occur even if the retry operation has been repeated predetermined times, errors are made to occur so as to stop the processing.

In the processing at the reproduction time illustrated in FIG. 4, if, at the step S5, no abort signal has been found to be present (i.e., the value in the ABRT register is equal to 0), the processing has transitioned to the step S2 once again, and then the data re-reading has been performed.

If the data reading has been repeated many times due to the occurrence of the uncorrectable errors, and if the inconvenience has occurred, the external host writes 1 into the ABRT register. Accordingly, the control unit 108 recognizes that the abort signal is present.

When the control unit 108 has judged that, at the step S3, the uncorrectable errors are present in the reproduced data, and that, at the step S5, the abort signal is present, the control unit performs the abort processing (S6).

Concretely, if the abort processing has been performed, the control unit aborts the reading of the to-be-reproduced data from on the magnetic head 102, then deleting all the data contained on the memory 104. Also, in order to inform the external host that the abort processing has been performed, the control unit writes 1 into an "Error" register within the interface register. This allows the external host to detect that the processing by the disc drive has been abnormally terminated.

Incidentally, here, instead of being deleted, the data on the memory 104 may also be controlled so that data containing the uncorrectable error will be able to be read. The reason for this is as follows: In the case of the real-time data such as video data, even if some error has occurred therein, it is not so conspicuous. This makes it unlikely that outputting the real-time data as it is will give rise to a serious problem.

When the abort processing has been terminated, the disc drive falls into a command-await status, thereby receiving another command from the external host. This makes it possible to cause the disc drive to perform the next operation without awaiting the termination of the retry processing by the disc drive.

As having been explained so far, the disc drive of the present embodiment is capable of inputting the abort signal from the external host. This condition allows the disc drive to forcibly abort such a time-consuming processing as the retry operation, and to execute the next operation. Consequently, even if a real-time processing becomes necessary, the retry operation does not hinder this real-time processing.

Incidentally, although, in the above-described embodiment, the configuration has been given such that the abort signal can be used to abort the retry operation at the time of the reproduction, the embodiment is not limited thereto. For example, the following configurations are also available: At the time of the recording, if the to-be-recorded data breaks off halfway, the abort signal can be used to abort the recording. Otherwise, at the time of the format, the abort signal can be used to abort the formating.

Next, explanation will be given below concerning the operation of a reproduction device which uses the disc drive of Embodiment 2.

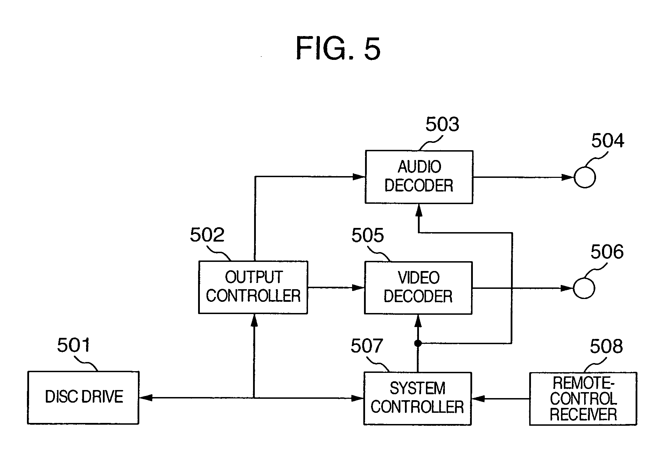

FIG. 5 illustrates a block diagram of the reproducing apparatus of the present embodiment.

The reference numerals in FIG. 5 denote the following configuration components: 501 the disc drive, 502 an output controller, 503 an audio decoder, 504 an audio output terminal, 505 a video decoder, 506 a video output terminal, 507 a system controller, and 508 a remote-control receiver.

Incidentally, here, the configuration of the disc drive 501 is basically the same as that of the disc drive illustrated in FIG. 1. Accordingly, the detailed explanation thereof will be omitted.

At the time of a data reproduction, the user, using a remote controller (not illustrated), selects desired contents from among the contents recorded in the disc drive 501, then instructing the reproducing apparatus to start the reproduction. The control signal from the remote controller is received at the remote-control receiver 508, then being inputted into the system controller 507. The system controller 507 starts the reproduction processing in accordance with the control signal from the remote controller.

Concretely, at first, the system controller 507 reads file management information from the disc drive 501 so as to distinguish and classify the data recorded on the disc. Subsequently, the system controller displays a list of the recorded contents, thereby prompting the user to make the selection. Subsequently, the system controller reads a file corresponding to the contents selected by the user, then inputting this file into the output controller 502.

At this time, the system controller 507 writes the data into the interface register within the disc drive 501 by selecting the reproduction-started sector number and the to-be-reproduced data length as the parameters. After that, the system controller writes a data Read command into the "Command" register within the interface register, thereby allowing the reading execution of the data on the disc.

The parameters and the command inputted from the system controller 507 are analyzed by the control unit 108 within the disc drive 501, thereby starting the data reading from on the disc.

In the disc drive 501, the data in the specified sector is read, and then the read data is written into the memory 104. Moreover, the disc drive informs the system controller 507 that the data is ready now.

When the to-be-read data is ready in the disc drive 501, the system controller 507 reads the data from the disc drive 501, then inputting the read data into the output controller 502.

The output controller 502 inputs the data read from the disc drive into the audio decoder 503 and the video decoder 505 with a predetermined timing.

The audio decoder 503 decodes the inputted audio data, then outputting the data to the audio output terminal 504 as an audio signal. The video decoder 505 decodes the inputted video data, then outputting the data to the video signal output terminal 506 as a video signal.

The above-described processing makes it possible to reproduce the contents recorded on the disc within the disc drive 501.

Next, the explanation will be given below concerning the operation in the case where, during the reproduction of the contents, data reading errors from on the disc has occurred.

During the above-described reproduction operation, in some cases, factors such as a scratch or dust on the disc cause uncorrectable errors to occur in the read data. Concretely, the data in the sector read from on the disc is subjected to a predetermined demodulation processing and a predetermined error-correction processing by the signal processing circuit 103. However, if the uncorrectable errors have been detected in the error-correction processing, the control unit 108 reads the data in the same sector once again. This retry operation is repeated until the uncorrectable errors have disappeared.

The retry operation allows the acquisition of correct data in many cases. In some cases, however, even the retry operation finds it impossible to acquire the correct data. The repetition of the retry operation stops the data reading, thus making it impossible to reproduce the data.

If no response has been made from the disc drive 501 for a predetermined time since the system controller 507 issued the command thereto, the system controller 507 judges that the disc drive 501 is in the retry operation.

At this time, the system controller 507 estimates and judges factors such as the response time of the disc drive 501 and the data amount and data rate accumulated in the output controller 502. As a result, if there exists a possibility that the retry operation will become a hindrance to the reproduction processing, the system controller 507 makes a request for an abort processing in order to abort the retry processing.

In the disc drive 501, when the request for the abort processing has been made, the data reading processing is aborted in accordance with the flowchart in FIG. 4.

When the system controller 507 has made the request for the abort processing, the reproduction is aborted. Consequently, the system controller 507 controls the video decoder 505, thereby temporarily halting (i.e., freezing) the video outputted from the video decoder 505. This prevents the picture from flickering, or prevents an abnormal picture from being displayed. Also, the system controller 507 controls the audio decoder 503 so as to mute the output signal from the audio decoder 503, thereby preventing an abnormal audio from being outputted.

Next, the system controller 507 restarts the data reading from the sector next to the one for which the abort processing has been performed. Then, after the data has been normally read, the system controller 507 restores the operation of the video decoder 505 and that of the audio decoder 503 back to the normal decode operations.

Even if the factors such as a scratch on the disc have made it impossible to read the normal data, and even if the response from the disc drive has been stopped, the above-described processing allows the abnormal operations to be restored back to the normal ones. Also, the above-described processing controls the video decoder and the audio decoder, thereby making it possible to prevent the abnormal audio and video from being outputted.

Here, the following control is also available: The sector number for which the retry processing has been performed is memorized by the system controller 507 in order that this sector will not be used for the recording/reproducing processing hereinafter.

As having been explained so far, in the disc drive of the present embodiment and the recording/reproducing apparatus using this disc drive, even if the response from the disc drive consumes a considerable time due to some abnormality, it becomes possible to cause the drive from the outside to abort its present operation and to perform the next one.

Although, in the above-described explanation, the explanation has been given employing the embodiment where the retry operation at the reproduction time is aborted, the present invention is not limited thereto, but is applicable to the various situations such as the recording time or the formatting time.

Also, although, in the above-described embodiment, the configuration has been given such that the abort processing is started by inputting the abort signal, the embodiment is not limited thereto. For example, the following configurations are also available: An abort command is prepared and provided as a command, and the abort processing is executed when the abort command is inputted into the "Command" register. Also, aside from the above-described interface register, an independent abort signal is directly inputted into the disc drive from the external host. In this case, it is all right for the control unit 108 to monitor the inputted abort signal and thereby to judge the necessity as to whether or not to execute the abort processing.

The present invention is applicable regardless of the inputting methods of inputting the abort instruction for performing the direction of the abort processing.

It should be further understood by those skilled in the art that although the foregoing description has been made on embodiments of the invention, the invention is not limited thereto and various changes and modifications may be made without departing from the spirit of the invention and the scope of the appended claims, as interpreted by the description and drawings.

## Claims

1. A recording/reproducing apparatus for recording/reproducing data on a recording medium (101), comprising:
an interface (105) which receives a command, and
a controller (108) which controlls said recording/reproducing apparatus, wherein
if, while a processing based on said received command is in execution, said interface (105) has received an abort-instructing command for aborting said processing in execution, said controller (108) controls said recording/reproducing apparatus so as to abort said processing corresponding to said command in execution, and be transited to a status in which a new command can be received.

2. A recording/reproducing apparatus for recording/reproducing data with respect to a recording medium (101), said data being a collection of data blocks in a predetermined byte number, and resulting from adding an error-correction code to each of said data blocks, said recording/reproducing apparatus comprising:
an interface (105) which receives a command,
a controller (108) which controls said recording/reproducing apparatus, and
a processor (103) which performs an error-correction processing of said data by using said error-correction code, wherein,
a reproducing processing of said data is executed using said processor (103) in accordance with a data-reproducing command received by said interface (105), and, if said processor (103) has detected uncorrectable errors,
said reproducing processing of said data is repeated until said uncorrectable errors have been not detected, and, if an abort-instructing command has been received during said reproducing processing of said data,
said controller (108) aborts said reproducing processing of said data.

3. A recording/reproducing method of recording/reproducing data on a recording medium (101), comprising the steps of:
receiving a command, and
executing a processing corresponding to said received command, and if, while said processing corresponding to said received command is in execution, an abort-instructing command for aborting said processing in execution has been received,
aborting said processing corresponding to said command in execution, and changing the processing to a status of being capable of inputting a new command.

4. A recording/reproducing method of recording/reproducing data with respect to a recording medium (101), said data being a collection of data blocks in a predetermined byte number, and resulting from adding an error-correction code to each of said data blocks, said recording/reproducing method comprising the steps of:
receiving a data-reproducing command, and
performing a reproducing processing of said data in accordance with said received data-reproducing command, and, if uncorrectable errors have been detected by an error-correction processing during said reproducing processing of said data,
repeating said reproducing processing of said data until said uncorrectable errors have been not detected, and, if an abort-instructing command for aborting said data reproducing has been received during said reproducing processing of said data,
aborting said reproducing processing of said data.
